(19) Europäisches Patentamt
European Patent Office
Office européen des brevets

(11) Publication number: 0 386 550 A1

(12) EUROPEAN PATENT APPLICATION

(21) Application number: 90103558.4

(51) Int. Cl.5: C10L 1/32, B01F 17/00

(22) Date of filing: 23.02.90

(30) Priority: 27.02.89 US 315516

(43) Date of publication of application: 12.09.90 Bulletin 90/37

(84) Designated Contracting States: AT BE CH DE DK ES FR GB GR IT LI LU NL SE

(71) Applicant: FUEL TECH, INC.
61 Taylor Reed Place
Stamford, CT 06906(US)

(72) Inventor: The inventor has agreed to waive his entitlement to designation

(74) Representative: Vossius & Partner
Siebertstrasse 4 P.O. Box 86 07 67
D-8000 München 86(DE)

# (54) Composition for stabilizing a water-in-oil emulsion.

(57) The invention presented is a composition for stabilizing an emulsion comprising about 0.1% to about 50% water-in-oil, the composition comprising either tannic acid or the reaction product of a first acid, which consists essentially of phthalic acid or a monobasic carboxylic acid, a polyamine and a second acid, and further wherein the stoichiometric relationship between the components is 1 mole of the first acid divided by the number of equivalents of the first acid:2 moles of the polyamine divided by the number of amine groups:1 mole of the second acid divided by the number of equivalents of the second acid.

EP 0 386 550 A1

## COMPOSITION FOR STABILIZING A WATER-IN-OIL EMULSION

The present invention relates to a composition for stabilizing a water-in-oil emulsion.

The flame combustion of liquid carbonaceous fuels (fuel oil), particularly heavier fractions such as bunker or like grades employed to fire large boilers of the type employed by utilities, factories and large buildings, has been the subject of considerable study. The amounts of heat, money and emissions involved in such operations can be staggering. A clear opportunity exists for improving cost effectiveness in firing such boilers.

The heavier grades of fuel oil, e.g., grades 4-6, are both less expensive and higher in heating capacity than the lighter distillate grades. Unfortunately, the high viscosity of these oils prevents the degree of mixing of air and oil necessary to obtain optimum combustion. This results not only in lost heating value, but the production of excessive particulate emissions. One method of producing such mixing of air with the oil is to form an emulsion of fuel oil with water (approximately 0.1% to about 50% water), which can function to increase the mixing of air with the fuel oil in the combustion zone of a large utility boiler. Although the exact reason for this is not fully understood, it is believed that the emulsified water droplets in the oil actually undergo "micro-explosions" which "shatter" the fuel oil and tend to permit more complete mixing of air with the fuel.

Unfortunately, though, such emulsions, if not sufficiently stable, can break down and actually interfere with efficient combustion of the fuel oil, rather than promote it.

Chemical emulsion stabilizers for water-in-oil emulsions have been known and used in the art with some but not universal success. Along these are lignin derivatives such as the lignosulfonates; gums and resins, and derivatives thereof; and blends of various surfactants, such as nonionic surfactants, like the ethoxylates, anionic surfactants like the sulfonates, cationic surfactants like the amine oxides, and amphoteric surfactants like imidazolidine compounds.

Although some of these stabilizers are somewhat successful, none are completely satisfactory for commercial applications. Moreover, the stabilizers which comprise naturally occurring substances, which generally exhibit the greatest stabilizing effect, are undesirable because insoluble material which is a part of the naturally occurring substance can precipitate and form a sludge which can collect at the bottom of tanks and/or "gum up" or otherwise block fuel lines in a boiler. The advantageous stabilizing effect of such products on an emulsion, therefore, can often be overcome by the deleterious effects of such sludge.

What is desired, therefore, is a chemical stabilizer for water-in-oil emulsions which contains little or no insoluble material and can effectively stabilize an emulsion of up to about 50% water in fuel oil.

The present invention relates to a composition for stabilizing an emulsion comprising about 0.1% to about 20%, more advantageously about 50% water-in-oil, as noted above. The composition of this invention comprises the reaction product of a first acid (which consists essentially of phthalic acid or a monobasic carboxylic acid), a polyamine and a second acid. Further, the general stoichiometric relationship between the components is 1 mole of the first acid divided by the number of equivalents of the first acid per 2 moles of the polyamine divided by the number of amine groups per 1 mole of the second acid divided by the number of equivalents of the second acid.

The first acid of the inventive composition generally comprises phthalic acid or a monobasic carboxylic acid as noted above, which can be defined as an organic acid having only a single carboxyl group (-COOH). Most preferred of these acids are oleic acid and benzoic acid derivatives having the general formula

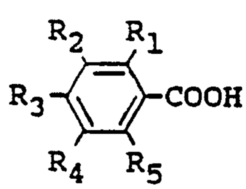

where $R_1$-$R_5$ each independently comprise a substituent such as hydrogen; a cyclic, straight or branched-chain, substituted or unsubstituted hydrocarbon; a substituted or unsubstituted amine group ($-NH_2$); a substituted or unsubstituted carbonyl group ($=C=O$); a hydroxyl group ($-OH$); an alkoxyl group ($-OR_6$, where $R_6$ can be a cyclic, straight or branched-chain, substituted or unsubstituted hydrocarbon; or an amine

group); or esters thereof.

Included among benzoic acid derivatives which are most suitable for use as the first acid of the present invention are tannic acid (which is an ester of a benzoic acid derivative), salicylic acid, gallic acid, p-anisic acid, 2-hydroxy naphthoic acid, 2-benzoyl benzoic acid, and mixtures thereof. An exception to the requirement that the first acid is monobasic is phthalic acid. For ease of description, phthalic acid will be treated as if it is, in fact, monobasic, although in practice, and in terms of preparing the inventive reaction product, phthalic acid can be treated as either monobasic or dibasic.

The polyamine which is used to form the reaction product of the present invention advantageously has the general formula $R_1R_2NR_5NR_3R_4$, wherein $R_1$-$R_4$ are each, independently, a cyclic, straight or branched chain, substituted or unsubstituted hydrocarbon, an alkyl- or aryl-amine group (-$NR_6R_7$, where $R_6$ and $R_7$ are hydrogen, an alkyl or an aryl group, provided that at least one of $R_6$ and $R_7$ is an alkyl or an aryl group), an imino group ($R_8$-CH=NH, where $R_8$ is a cyclic, straight or branched-chain, substituted or unsubstituted hydrocarbon, or an amine group) and hydrogen; and $R_5$ is a cyclic, straight or branched chain, substituted or unsubstituted hydrocarbon, an alkyl- or aryl-amino group and an alkyl- or aryl-imino group.

Most advantageously, the polyamine which is used in the reaction product of this invention is selected from ethylene diamine (EDA), amino guanidine bicarbonate (AGB), oleyl diamine (ODA), tetraethylene pentamine (TEPA), and mixtures thereof.

It is preferred, although not critical, that the polyamine have a carbon chain length such that the ratio of carbon to amine group in the polyamine is no greater than about 8:1, most preferably no greater than about 6:1. This is because polyamines of longer chain length ratios (such as oleyl diamine, carbon to amine group ratio of 9:1), when reacted with a first acid having a larger molecular structure, such as 2-benzoyl benzoate, will be less effective at emulsion stabilization.

As previously discussed, the reaction product which forms the emulsion stabilizer of the present invention further comprises a second acid. This second acid can be an inorganic acid such as hydrochloric acid (in which case an equivalent is each available acid hydrogen), but is more preferably an organic acid, most preferably acetic acid, a fatty acid such as oleic acid, caprylic acid or fatty acids produced by hydrolysis of a fat, or a dimer of oleic acid, and mixtures thereof (in which case an equivalent is each carboxyl group of the acid).

The first acid, polyamine and second acid which combine to form the emulsifier of the present invention are reacted together so as to provide a stoichiometric relationship between the components such that for every one mole of the first acid (which contains only one carboxyl group) or two moles of phthalic acid (which contains two carboxyl groups), when phthalic acid is treated as dibasic, there are two moles of the polyamine (divided by the number of amine groups in the polyamine) and one mole of the second acid (divided by the number of carboxyl groups of the second acid). For instance, for every one mole of the first acid, such as salicylic acid, there is one mole of ethylene diamine (which has two amine groups) or two-fifths of a mole of tetraethylene pentamine (which has five amine groups). Likewise, for every one mole of the first acid and two moles of the polyamine, divided by the number of amine groups, there is one mole of hydrochloric acid (which has one acid hydrogen (or equivalent)), one mole of acetic acid (which has one carboxyl group (or equivalent)) or one-half mole of oleic acid dimer (which has two carboxyl groups (or equivalents)).

The inventive emulsion stabilizer is formed by treating or reacting, in the proper stoichiometric ratios, the first acid with the polyamine to form a monosubstituted salt with at least one free amine group, and then reacting the free amine group(s) with the proper stoichiometric amount of the second acid to form a cationic surfactant, which is the emulsion stabilizer of the present invention. More particularly, the reaction conditions under which the stabilizer is made, as would be familiar to the skilled artisan, include treating the first acid with the polyamine by admixing the two in a suitable solvent such as water, a polar solvent such as an alcohol, especially ethylene glycol, or butyl cellosolve, or an esterified hydrocarbon such as a vegetable oil like corn oil, or mixtures thereof. The resulting salt is then reacted with the second acid by admixing the two in the solvent, to form the claimed emulsion stabilizer.

Of course, it will be recognized that the reactants can be provided in greater than stoichiometric amounts, although the reaction product will have the proper stoichiometric relationship. The presence of unreacted components with the inventive product will not negatively affect the efficacy of the stabilizer.

Besides the reaction product emulsion stabilizer as described above, it has also now been found that tannic acid will stabilize a water-in-oil emulsion alone, without the addition of any other agents or reaction products.

The emulsions for which the stabilizer of the present invention is intended are water-in-oil emulsions having up to about 20% water. Such emulsions which have practical significance in combustion applications

and which would be most in need of stabilization are those having at least 0.1% water. Typically, the oil phase in such emulsions comprises what is conventionally known as #4 oil, #5 oil and #6 residual oil, as defined by the American Society of Testing and Measurement (ASTM) Standard Specification for Fuel Oils (Designation: D 396-86), and coalite, which is a low viscosity, high British Thermal Unit (BTU) blend of #6 and #2 fuel oils approximating a #4 or #5 fuel oil, generally having the following specifications, as determined by standard ASTM methods:
BTU/gallon 145,000-148,000
specific gravity >1.0
viscosity <500 Saybolt Seconds Universal (SSU) at 50°C. measured on a Saybolt viscometer having a universal orifice
The emulsion stabilizer is admixed in with the water and the oil in an amount of about 0.01% to about 1.0% by weight to provide a stabilized emulsion. Although the particular point at which the stabilizer is admixed into the emulsion is not critical, desirably the stabilizer is present at the time of emulsifying of the water into the oil. The stabilizer can be provided in either phase, most advantageously the water phase.

The first acid/polyamine/second acid reaction product emulsion stabilizers of the present invention provide chemical stabilization, which is dependent on hydrophyllic-lipophyllic balance (HLB) as well as on the chemical nature of the stabilizer. The HLB of an emulsion stabilizer is an expression of the balance of the size and strength of the hydrophilic and the lipophilic groups of the emulsion stabilizer. The HLB, which was developed as a guide to emulsifiers by ICI Americas Inc. of Wilmington, Delaware, can be determined in an number of ways, most conveniently for the purposes of this invention by the solubility or dispersibility characteristics of the stabilizer in water, from no dispersibility (HLB range of 1 to 4) to clear solution (HLB range of 13 or greater). The emulsion stabilizers of the present invention should most advantageously have an HLB of 8 or less, meaning that after vigorous agitation they form a milky dispersion in water (HLB range of 6 to 8), poor dispersion in water (HLB range of 3 to 6), or no dispersibility in water.

It is also possible to utilize the inventive emulsion stabilizer in combination with one or more physical stabilizers to maximize the stabilization achieved and to provide economic benefits, due to the relatively low cost of physical stabilizers. Physical stabilizers most likely increase emulsion stability by forming an insoluble barrier attracted to the oil/water interface. Exemplary of suitable physical stabilizers are waxes, cellulose products and gums such as welan gum and xanthan gum. When utilizing a combination of the emulsion stabilizers of this invention in combination with one or more physical stabilizers, the physical stabilizer is present in a mixture with the inventive stabilizer in an amount of about 0.05% to about 5.0% by weight of the total mixture. The combination emulsion stabilizer is then used at the same levels in the emulsion as noted above.

The stabilization provided by the reaction product of the present invention must be sufficient to maintain the water emulsified in the oil to a greater extent than if the stabilizer was not present, and to as great an extent as possible. Of course, what would be considered a highly desirable level of stabilization will vary depending on the actual percentage of water emulsified and the particular oil used as the continuous phase. For example, when the oil is coalite, it is highly desired that no more than about 0.1% free water be present in the emulsion. When the oil is #4 oil, that percentage would be about 0.1%; when the oil is #5 oil, 0.5%; and #6 oil, 1.0%.

This stabilization of the emulsion must be effective under ambient conditions, i.e., the temperature at which the oil is normally stored, as well as under those conditions to which the emulsion is expected to be exposed, such as the temperature in the boiler fuel feed lines. Breakdown of the emulsion under these conditions will essentially destroy the effectiveness of the water-in-oil emulsion before it can provide its desired combustion enhancements. Generally, the emulsion stabilizer of this invention will stabilize the emulsion at temperatures up to about 65°C., more preferably up to about 90°C. and even as high as 100°C.

The following examples further illustrate and explain the invention by detailing the preparation of the inventive emulsion stabilizers and of emulsions stabilized therewith.

## Example I

A series of emulsion stabilizers to be tested are prepared in the following manner:

1. 8.5 grams of tannic acid is dissolved in 12.5 grams of a 50/50 mixture of butylcellosolve and water. To this solution is added 0.38 grams of tetraethylene pentamine. The resultant mixture is maintained at 60°C. for 1 hour. Oleic acid (1.4 grams) is then added to the mixture with stirring to form an emulsion

stabilizer according to the present invention.

2. 5.75 grams of salicylic acid is dissolved in 33.0 grams of butylcellosolve. To this solution is added 11.67 grams of oleyl diamine. The resultant mixture is maintained at 60° C. for 1 hour. Dimer acid, obtained commercially as Empol 1014 dimer acid from Emery Industries of Cincinnati, Ohio (11.8 grams) is then added to the mixture with stirring to form an emulsion stabilizer according to the present invention.

3. 8.5 grams of tannic acid is dissolved in 12.5 grams of a 50/50 mixture of butylcellosolve and water. To this solution is added 0.30 grams of ethylene diamine. The resultant mixture is maintained at 60° C. for 1 hour. Oleic acid (1.4 grams) is then added to the mixture with stirring to form an emulsion stabilizer according to the present invention.

4. 10.62 grams of gallic acid is dissolved in 75.0 grams of ethylene glycol. To this solution is added 3.75 grams of ethylene diamine. The resultant mixture is maintained at 60° C. for 1 hour. A stoichiometric excess of acetic acid (7.5 grams) is then added to the mixture with stirring to form an emulsion stabilizer according to the present invention.

5. 8.5 grams of tannic acid is dissolved in 12.5 grams of a 50/50 mixture of butylcellosolve and water. To this solution is added 0.38 grams of tetraethylene pentamine. The resultant mixture is maintained at 60° C. for 1 hour. Acetic acid (0.30 grams) is then added to the mixture with stirring to form an emulsion stabilizer according to the present invention.

6. 8.5 grams of tannic acid is dissolved in 12.5 grams of a 50/50 mixture of butylcellosolve and water. To this solution is added 0.30 grams of ethylene diamine. The resultant mixture is maintained at 60° C. for 1 hour. Acetic acid (0.30 grams) is then added to the mixture with stirring to form an emulsion stabilizer according to the present invention.

7. 17.25 grams of salicylic acid is dissolved in 150.0 grams of butylcellosolve. To this solution is added 7.5 grams of ethylene diamine. The resultant mixture is maintained at 60° C. for 1 hour. Oleic acid (35.25 grams) is then added to the mixture with stirring to form an emulsion stabilizer according to the present invention.

8. 17.25 grams of salicylic acid is dissolved in 150.0 grams of butylcellosolve. To this solution is added an excess (17.0 grams) of amino guanidine bicarbonate. The resultant mixture is maintained at 60° C. for 1 hour. Oleic acid (35.25 grams) is then added to the mixture with stirring to form an emulsion stabilizer according to the present invention.

9. 10.62 grams of gallic acid is dissolved in 75.0 grams of ethylene glycol. To this solution is added 4.75 grams of tetraethylene pentamine. The resultant mixture is maintained at 60° C. for 1 hour. A stoichiometric excess of acetic acid (7.5 grams) is then added to the mixture with stirring to form an emulsion stabilizer according to the present invention.

10. 9.42 grams of 2-benzoyl benzoic acid is dissolved in 50.0 grams of butylcellosolve. To this solution is added 3.15 grams of tetraethylene pentamine. The resultant mixture is maintained at 60° C. for 1 hour. Acetic acid (2.5 grams) is then added to the mixture with stirring to form an emulsion stabilizer according to the present invention.

11. 10.62 grams of gallic acid is dissolved in 75.0 grams of ethylene glycol. To this solution is added 3.75 grams of ethylene diamine. The resultant mixture is maintained at 60° C. for 1 hour. A stoichiometric excess of oleic acid (35.2 grams) is then added to the mixture with stirring to form an emulsion stabilizer according to the present invention.

12. 17.25 grams of salicylic acid is dissolved in 150.0 grams of butylcellosolve. To this solution is added 23.75 grams of tetraethylene pentamine. The resultant mixture is maintained at 60° C. for 1 hour. Acetic acid (7.5 grams) is then added to the mixture with stirring to form an emulsion stabilizer according to the present invention.

13. 7.83 grams of oleic acid is dissolved in 22.2 grams of butylcellosolve. To this solution is added 2.5 grams of ethylene diamine. The resultant mixture is maintained at 60° C. for 1 hour. Caprylic acid (4.0 grams) is then added to the mixture with stirring to form an emulsion stabilizer according to the present invention.

14. 6.33 grams of p-anisic acid is dissolved in 33.3 grams of butylcellosolve. To this solution is added 3.5 grams of ethylene diamine. The resultant mixture is maintained at 60° C. for 1 hour. Oleic acid (16.5 grams) is then added to the mixture with stirring to form an emulsion stabilizer according to the present invention.

15. 17.25 grams of salicylic acid is dissolved in 150.0 grams of butylcellosolve. To this solution is added 7.5 grams of ethylene diamine. The resultant mixture is maintained at 60° C. for 1 hour. Acetic acid (7.5 grams) is then added to the mixture with stirring to form an emulsion stabilizer according to the present invention.

16. 17.25 grams of salicylic acid is dissolved in 150.0 grams of butylcellosolve. To this solution is

added a stoichiometric excess (17.0 grams) of amino guanidine bicarbonate. The resultant mixture is maintained at 60° C. for 1 hour. Acetic acid (7.5 grams) is then added to the mixture with stirring to form an emulsion stabilizer according to the present invention.

17. 7.83 grams of 2-hydroxy naphthoic acid is dissolved in 100 grams of butylcellosolve. To this solution is added 2.5 grams of ethylene diamine. The resultant mixture is maintained at 60° C. for 1 hour. Acetic acid (2.5 grams) is then added to the mixture with stirring and maintained at 60° C. for 1 hour to form an emulsion stabilizer according to the present invention.

18. 11.75 grams of oleic acid is dissolved in 33.3 grams of butylcellosolve. To this solution is added 11.15 grams of oleyl diamine. The resultant mixture is maintained at 60° C. for 1 hour. Acetic acid (2.5 grams) is then added to the mixture with stirring to form an emulsion stabilizer according to the present invention.

19. 11.75 grams of oleic acid is dissolved in 33.3 grams of butylcellosolve. To this solution is added 11.15 grams of oleyl diamine. The resultant mixture is maintained at 60° C. for 1 hour. Oleic acid (11.8 grams) is then added to the mixture with stirring to form an emulsion stabilizer according to the present invention.

20. 6.33 grams of p-anisic acid is dissolved in 33.3 grams of butylcellosolve. To this solution is added 11.15 grams of oleyl diamine. The resultant mixture is maintained at 60° C. for 1 hour. Oleic acid (11.8 grams) is then added to the mixture with stirring to form an emulsion stabilizer according to the present invention.

21. 5.75 grams of salicylic acid is dissolved in 33.3 grams of butylcellosolve. To this solution is added 11.67 grams of oleyl diamine. The resultant mixture is maintained at 60° C. for 1 hour. Acetic acid (2.5 grams) is then added to the mixture with stirring to form an emulsion stabilizer according to the present invention.

22. 18.8 grams of 2-benzoyl benzoic acid is dissolved in 100.0 grams of butylcellosolve. To this solution is added 22.3 grams of oleyl diamine. The resultant mixture ia maintained at 60° C. for 1 hour to form a basic mixture.

To one half of the basic mixture is added 11.8 grams of oleic acid with stirring to form an emulsion stabilizer according to the present invention.

To one half of the basic mixture is added 2.5 grams of acetic acid with stirring to form an emulsion stabilizer according to the present invention.

## Example II

The emulsion stabilizers prepared in accordance with Example I are tested by combining 90 grams of either #6 oil or coalite, 10 grams of water and 0.1 grams of the emulsion stabilizer in a beaker. The resulting mixture is the passed through a Chase-Logeman brand hand homogenizer at constant setting to form an emulsion.

The thusly formed emulsion (100.1 grams) is then diluted 50/50 with #2 fuel oil, poured into a 100 milliliter calibrated centrifuge tube and spun at maximum speed in an HNU model IEC HN-SII centrifuge for 10 minutes. The percent free water in the centrifuge tube is observed and recorded by doubling the percent volume of free water observed in the tube. The results are set out in Table 1. Also set out in Table 1 are the results of two runs without emulsion stabilizers, included as controls.

Table 1

| Stabilizer First Acid | Poly Amine | Second Acid | Free water in Coalite | Free Water in #6 Oil |
|---|---|---|---|---|
| Tannic | TEPA | Oleic | 0 | 0.2 |
| Sali-cylic | ODA | Dimer | 0 | 0.3 |
| Tannic | EDA | Oleic | 0.1 | 0.4 |
| Gallic | EDA | HAc | 0 | 0.8 |
| Tannic | TEPA | HAc | 0 | 0.8 |
| Tannic | EDA | HAc | 0 | 1.2 |
| Sali-cylic | EDA | Oleic | 0 | 2.0 |

Table 1 (cont.)

| Stabilizer First Acid | Poly Amine | Second Acid | Free water in Coalite | Free Water in #6 Oil |
|---|---|---|---|---|
| Sali-cylic | AGB | Oleic | 0 | 2.5 |
| Gallic | TEPA | HAc | 0 | 3.0 |
| 2-benzoyl benzoic | TEPA | HAc | 0.1 | 6.0 |
| Gallic | EDA | Oleic | 0.1 | 8.0 |
| Sali-cylic | TEPA | HAc | 0 | 10.0 |
| Oleic | EDA | Cap-rylic | 0 | 10.0 |
| P-anisic | EDA | Oleic | 0.1 | 10.0 |
| Sali-cylic | AGB | HAc | 0.1 | 7.0 |
| Sali-cylic | EDA | HAc | 0.1 | 8.0 |
| 2-hydroxy naphthoic | EDA | HAc | 0.2 | --- |
| Oleic | ODA | HAc | 0.2 | --- |
| Oleic | ODA | Oleic | 0.2 | --- |
| P-anisic | ODA | Oleic | 0.5 | --- |
| P-anisic | ODA | HAc | 0.9 | --- |
| 2-benzoyl benzoic | ODA | Oleic | 1.8 | --- |
| 2-benzoyl benzoic | ODA | HAc | 4.5 | --- |
| Tannic | --- | --- | 0 | 0.4 |
| Control | | | 1.4 | 2.8 |
| Control | | | 4.0 | 5.0 |

As will be clearly observed with reference to Table 1, the emulsion stabilizers of the present invention are effective at stabilizing a water-in-oil emulsion.

## Claims

1. A composition for stabilizing an emulsion comprising about 0.1% to about 50% water-in-oil, the composition comprising the reaction product of a first acid, which consists essentially of phthalic acid or a monobasic carboxylic acid, a polyamine and a second acid, and further wherein the stoichiometric relationship between the components is 1 mole of said first acid divided by the number of equivalents of said first acid:2 moles of said polyamine divided by the number of amine groups:1 mole of said second acid divided by the number of equivalents of said second acid.

2. The composition of claim 1 wherein said first acid comprises oleic acid or a benzoic acid derivative having the general formula

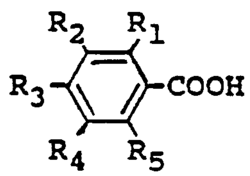

or an ester thereof, wherein $R_1$-$R_5$ each independently comprise hydrogen; a cyclic, straight or branched chain, substituted or unsubstituted hydrocarbon; a substituted or unsubstituted amine group; a substituted or unsubstituted carbonyl group; an alkoxyl group; or a hydroxyl group.

3. The composition of claim 2 wherein said first acid is selected from the group consisting of tannic acid, salicylic acid, gallic acid, p-anisic acid, 2-hydroxy naphthoic acid, 2-benzoyl benzoic acid, and mixtures thereof.

4. The composition of claim 1 wherein said polyamine has the general formula $R_1R_2NR_5NR_3R_4$, wherein $R_1$-$R_4$ are each, independently, selected from the group consisting of a cyclic, straight or branched chain, substituted or unsubstituted hydrocarbon, an alkyl- or aryl-amino group, an imino group and hydrogen; and $R_5$ is selected from the group consisting of a cyclic, straight or branched chain, substituted or unsubstituted hydrocarbon, an alkyl- or aryl-amino group and an alkyl- or aryl-imino group.

5. The composition of claim 4 wherein said polyamine is selected from the group consisting of ethylene diamine, amino guanidine bicarbonate, oleyl diamine, tetraethylene pentamine, and mixtures thereof.

6. The composition of claim 1 wherein said second acid comprises an organic acid.

7. The composition of claim 6 wherein said second acid is selected from the group consisting of acetic acid, the hydrolysis products of fats, and mixtures thereof.

8. The composition of claim 7 wherein said second acid is selected from the group consisting of caprylic acid, oleic acid, a dimer of oleic acid, and mixtures thereof.

9. A stabilized emulsion comprising an emulsion of water-in-oil and further comprising a stabilizing composition according to any one of claims 1 to 8.

10. A stabilized emulsion comprising an emulsion of water-in-oil and further comprising a stabilizing composition which comprises tannic acid.

11. The emulsion of claim 9 or 10 wherein water is present in an amount of about 0.1% to about 50% by weight.

12. The emulsion of claim 11 wherein said tannic acid is present in an amount of about 0.01% to about 1% by weight.

13. The emulsion of claim 9 or 10 wherein said oil is selected from the group consisting of coalite, #4 oil, #5 oil and #6 residual oil.

14. The emulsion of claim 13 wherein said oil is present in an amount of about 99.89% to about 49% by weight.

European Patent Office

# EUROPEAN SEARCH REPORT

Application Number

EP 90 10 3558

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 021 471 (UNILEVER LTD) * Claims 1,5,6; page 1, lines 4-7; page 3, lines 19-28; page 4, lines 10-14 * | 1,4,5,7,8,9,11,13,14 | C 10 L 1/32<br>B 01 F 17/00 |
| A | EP-A-0 004 195 (ICI AMERICAS) | | |
| A | FR-A-1 313 738 (UNILEVER) | | |
| A | US-A-4 561 901 (SCHILLING) | | |
| A | US-A-4 547 224 (SCHILLING) | | |
| A | FR-A-2 525 618 (WESTVACO) | | |

TECHNICAL FIELDS SEARCHED (Int. Cl.5)

C 10 L
B 01 F

The present search report has been drawn up for all claims

| Place of search | Date of completion of the search | Examiner |
|---|---|---|
| THE HAGUE | 12-06-1990 | DE HERDT O.C.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)